# EUROPEAN PATENT SPECIFICATION

(11) **EP 2 752 305 B1**
(45) Date of publication and mention of the grant of the patent: **29.06.2016**
(21) Application number: 13199402.2
(22) Date of filing: 23.12.2013
(51) Int. Cl.: B42D 25/00, G02B 5/18, B42D 25/328

(54) **A method of making variable diffractive metallic microelements in a laminable plastic body**
Verfahren zur Herstellung variabler diffraktiver metallischer Mikroelemente in einem laminierbaren Kunststoffkörper
Procédé de fabrication de microéléments métalliques à diffraction variable dans un corps en plastique pouvant être laminé

(30) Priority: 07.01.2013 IT RM20130007
(43) Date of publication of application: 09.07.2014
(73) Proprietor: Istituto Poligrafico e Zecca dello Stato S.p.A., 00138 Roma (RM) (IT)
(72) Inventor: Ghisa, Giuseppe, 00138 Rome (IT); Luciani, Laura, 00138 Rome (IT)
(74) Representative: Papa, Elisabetta

(56) References cited:
- US-A1- 2002 117 846
- US-A1- 2003 223 616
- US-A1- 2005 257 880
- US-A1- 2011 127 762

## Description

### Technical field of the invention

The present invention relates to a method of manufacturing diffractive metallic elements having security/anti-counterfeit function in a laminable body. The method is particularly suitable for manufacturing identification documents, for example in ID1 and ID3 format (ISO/IEC 7810:2003).

### Background

Identification documents currently employed - especially those in "card" format (i.e. identity cards) and a booklet format with polycarbonate data page (such as electronic passports) - contain anti-counterfeit optical elements. These elements may be optical devices (such as holograms) and may have diffractive metal m icroelements.

Various methods have been developed for the manufacturing of said diffractive metal microelements and of the documents/products that include them.

In particular, EP 2 451 650 describes a method of generation of security diffractive microelements in a multi-layer body. The final product is a security transparent film, to be applied by hot gluing on the card format documents for the protection of sensitive data. This film is constituted by a succession of transparent layers containing diffractive reliefs, superimposed over reflective layers containing metal microelements. This film is suitable to generate a multitude of complex optical effects to vary of the lighting.

WO 2010/089399 describes the construction of a layer of laminable coating, suitable for protecting a holographic relief. This protective layer is made from a pattern of insulating microelements, drowned in a film of transparent and/or reflective fixative material.

Similarly, WO 2012/076547 describes a multilayer film containing metal microstructures spread on a transparent "carrier" and distributed in such a way to encode a readable information. Even in this case, the multilayer film containing the encoded information is applied by hot gluing on the customized document to protect sensitive data.

US 2005/0257880 describes a process for the manufacturing of a laminated product that provides the coupling of a film or a sheet containing functional elements, such as holograms or metallic decorations of various kinds, on a planar laminar element. This coupling takes place by means of interposition of an adhesive.

The processes of the prior art above mentioned have several significant disadvantages.

First of all, the obtained documents cannot have variable diffractive metallic microelements, i.e. microelements for coding customized information different from document to document.

Furthermore, the mechanical properties of the final document, made with such processes, are not optimal with regard to the resistance versus tampering cutting attempt: in fact the layer or film that incorporates the metallic microelements is made by assembling different materials by use of adhesives and/or adhesive layers, which have a negative impact on the delamination resistance.

### Summary of the invention

The technical problem posed and solved by the present invention is therefore to provide a method of manufacturing variable diffractive metallic microelements in a laminable body and a document that includes such elements, which method allows to overcome the drawbacks mentioned above with reference to the prior art.

This problem is solved by a method according to claim 1.

Preferred features of the invention are object of the depending claims.

In the present context, metallic microelements are intended as elements with dimensions comprised preferably in a range of about 10-200 microns.

The method according to the invention enables the manufacturing of variable diffractive metallic microelements integral with the multilayer body of a security document.

In particular, these metallic microelements are generally made by fixed graphisms and variable codes, the latter being apt to the unique identification of the document. The variable codes can be for example alphanumeric elements, automatic machine-readable codes (Bar-code or 2D-code, or other) and are associated with, uniquely, the identification data of the document in which they are incorporated.

In the proposed method, the aforesaid metallic microelements are incorporated in a single substrate, such as polycarbonate, using an assembly process with one or more layers and subsequent lamination, therefore there is no need to use adhesives for coupling materials having different characteristics.

The resulting document - and/or the part of the document that incorporates the aforesaid diffractive metallic microelements - is therefore of high resistance and mechanical strength, particularly with regard to the resistance to tampering attempts. The document therefore presents security properties improved over the prior art.

The invention can therefore relate to an identification document, preferably manufactured by the process described above. This document comprises:
▪ a security layer, made by a laminable body, in turn made up of a substrate, preferably of plastic material, bearing variable diffractive metallic microelements applied on the substrate and such as to define a security pattern; and
▪ one or more further layers assembled with said security layer by lamination.

Preferably, the substrate is transparent at least at said diffractive metallic microelements.

The metal can be selected from a group comprising: aluminum, copper, titanium and zinc oxide and/or iron oxide.

Preferably, the security pattern comprises profiles selected from: microlines, microwritings, graphic patterns of microlines and coded information.

Always according to a preferred embodiment, the substrate and/or one or more further layers are of plastic material, preferably polycarbonate.

Preferably, said one or more further layers are transparent and/or bearing further security elements and / or graphics elements.

In a preferred embodiment, the security layer is an intermediate layer of the document.

The diffractive metallic microelements are preferably facing and/or visible towards/through a front surface for consultation of the document.

When the document comprises plural security layers, each can be made up of a laminable body in turn made up of a substrate, preferably of plastic material, bearing diffractive metallic microelements applied on the substrate itself and such as to define a respective security pattern.

Other advantages, features and operative modes of the present invention will become evident from the following detailed description of some embodiments, given by way of example and not of limitation.

### Brief description of the figures

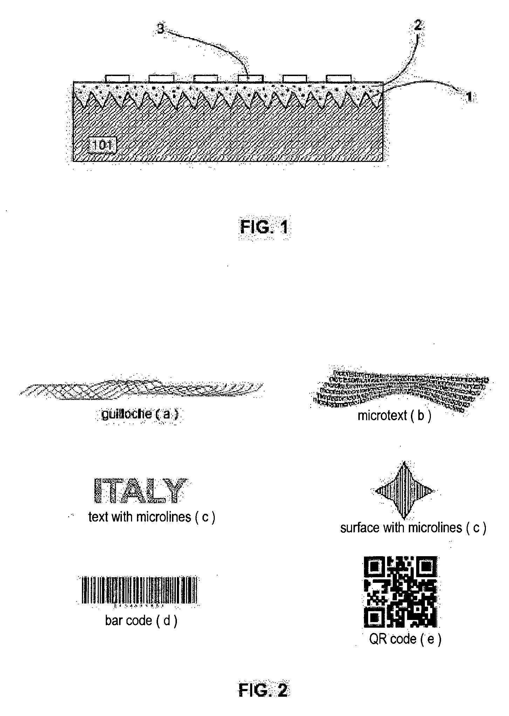

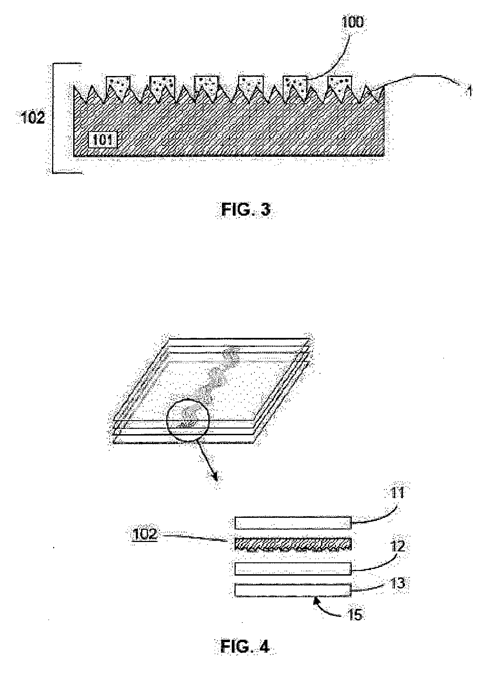

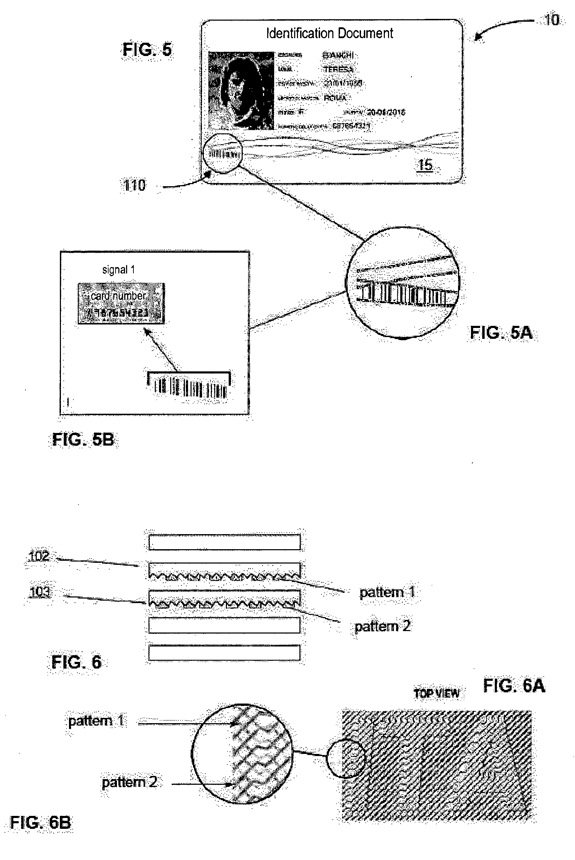

Reference will be made to the figures of the accompanying drawings, in which:
▪ Figure 1 shows a sectional view which refers to a step of manufacturing of a laminable body bearing metallic microelements, according to a preferred embodiment of the method of the present invention;
▪ Figure 2, in the variants (a) and (e), shows schematically some patterns which can be reproduced by the arrangement of metallic microelements according to the method of Figure 1;
▪ Figure 3 shows a section view that refers to another step of the method of Figure 1;
▪ Figure 4 shows a perspective view that refers to a step of manufacturing of an identification document from a laminable body obtained by the method of the preceding figures;
▪ Figure 5 shows a front view of the identification document of Figure 4, completely assembled;
▪ Figures 5A and 5B show respectively an enlarged detail of the document of Figure 5 and a possible decoding of the information associated with a relative pattern of metallic microelements;
▪ Figure 6 refers to a variant embodiment of the method of manufacturing of an identification document of Figure 4, showing a schematic side view of an assembly step of this document; and
▪ Figures 6A and 6B each show a schematic front view, respectively, of part of the document of Figure 6 assembled and of an enlarged detail of said part.

### Detailed description of preferred embodiments

Figure 1 refers to a first step of a method of manufacturing of variable diffractive metallic microelements on a laminable body.

In the present example these microelements are intended for a security function anti-counterfeit.

As will be explained shortly, the laminable body obtained with the sequence of steps described below may be assembled, precisely for lamination, with one or more further layers to form an identification document.

As shown in the above Figure 1, a substrate 101 with material/configuration suitable for a subsequent lamination is provided. Preferably, the substrate 101 is of plastic material, even more preferably polycarbonate.

On the substrate 101, particularly on a working surface of this that is the upper surface of Figure 1, a diffractive pattern 1, schematically represented in the figures, is obtained, preferably embossed.

The surface of the substrate 101 bearing the diffractive pattern 1 is then covered with a coating layer 2 made of metallic material, extending for the entire thickness of the first diffractive pattern 1. Preferably, the coating layer 2 is deposited by evaporation or sputtering.

Preferably, the metallic material of the coating layer 2 is selected from a group comprising: aluminum, copper, titanium and zinc oxide and/or iron oxide, or other material solving the same purpose.

On the coating layer 2 is then applied a protective material 3, arranged according to a protective pattern. The application of the protective material can be realized according to any one of the known manufacturing techniques.

As shown in Figure 2, the pattern of the protective material 3 may consist of, or include, microlines (alternative (a)), microprint or microtext (alternative (b)), graphic patterns of microlines (alternatives (c) and (d)) and/or encoded information (alternatives (d) and (e)).

With reference to Figure 3, in a subsequent step of the method the metallic material of the coating layer 2 is removed at regions not affected by the protective layer 3. In this way, the protective pattern is transferred to the residual metallic layer. The protective layer is removed also.

It is obtained in this way a laminable body bearing diffractive metallic microelements, denoted overall by 102 in Figure 3. In this Figure, the metallic microelements are denoted by 100.

In the present example, the metallic microelements 100 each have dimensions preferably in a range of about 10-200 microns.

Preferably, the substrate 101 is transparent at least at the diffractive metallic microelements 100.

With reference to Figure 4, and as mentioned above, the laminable body 102 can be made part of an identification document, preferably made of plastic (polycarbonate, in particular), such as a "card" format document or the data page of a booklet format document. Figure 4 shows just an assembly step, by lamination, of the laminable body 102 with further layers of the forming document. In particular, in the proposed example three further laminable layers are provided, denoted respectively by 11, 12 and 13, each preferably made of plastic material and even more preferably polycarbonate.

The original diffractive relief 1 is preserved at the metallic microelements 100, while disappears outside of them when the body 102 is subjected to the lamination process.

Each of the layers 11-13 may in turn bear further security elements and/or graphic elements and/or be transparent.

As shown again in Figure 4, in the present example it is envisaged that the laminable body 102 is inserted as an intermediate layer forming the document.

Moreover, always in the present example it is envisaged that the layers denoted by 12 and 13 being transparent at least at the metallic microelements 100, so that the latter are visible through a consultation front surface 15 of the document, and to this end facing this consultation surface 15.

Figure 5 shows the assembled document, generally denoted with 10. In that document 10 is visible precisely, at the consultation surface 15, the pattern overall defined by the metallic microelements, here denoted by 110. In the example shown, this pattern 110 consists of a bar code, better shown in Figure 5A, which can be decoded by a special reader, as schematically represented in Figure 5B. In this case, the coded information corresponds to the ID number of the security document.

Figures 6, 6A and 6B relate to an alternative embodiment of the above mentioned document, in which the integration of two laminable bodies bearing diffractive metallic microelements, denoted respectively with 102 and 103, is provided.

The diffractive pattern defined by the metal microelements of the two bodies 102 and 103 are applied into register and/or arranged/combined to obtain complex graphics effects, as represented in the configuration shown in the figures.

The present invention has been sofar described with reference to preferred embodiments. It is to be meant that other embodiments may exist, all belonging to the same inventive core, as defined by the protection scope of the claims reported here below.

## Claims

1. A process of manufacturing of an identification (ID) document (10), preferably a document of plastic material, which document (10) has a laminable body (102) bearing anti-counterfeit variable diffractive metallic microelements (100), which method comprises the steps of:
(a) manufacturing a diffractive pattern (1) on a laminable substrate (101), the latter preferably of plastic material;
(b) applying a coating layer (2) of metallic material at said diffractive pattern (1), for the entire thickness of the latter;
(c) masking the surface of said metallic layer (2) with a protective material (3) arranged according to a protective pattern containing graphisms and/or variable coded information;
(d) removing the metallic material of said coating layer (2) at zones not covered by said protective material (3), wherein the overall arrangement is such that on said substrate (101), following said step (d), variable diffractive metallic microelements (100) remain defined; and
(e) assembling, by lamination, the laminable body (102) with one or more further layers (11-13) of the document being made,
wherein said step (e) provides that the diffractive pattern (1) be preserved at the metallic microelements (100) and be eliminated from the remaining substrate (101).

2. The process according to claim 1, wherein said substrate (101) is transparent at least in correspondence of said diffractive metallic microelements (100).

3. The process according to claim 1 or 2, wherein said substrate (101) is made of polycarbonate.

4. The process according to any one of the preceding claims, wherein said diffractive pattern (1) of said step (a) is impressed, preferably heat-impressed, on said substrate (101).

5. The process according to any one of the preceding claims, wherein said step (b) is carried out by evaporation or sputtering.

6. The process according to any one of the preceding claims, wherein said metal is selected from a group comprising: aluminum, copper, titanium and zinc oxide and/or iron oxide.

7. The process according to any one of the preceding claims, wherein said protective pattern comprises profiles selected from: microlines, microwritings, graphic patterns of microlines and coded information.

8. The process according to any one of the preceding claims, wherein said protective material (3) is selected from a group comprising: photoresist, inks, UV resins.

9. The process according to any one of the preceding claims, wherein said metallic microelements (100) have sizes comprised in a range of about 10-200 microns.

10. The process according to any one of the preceding claims, wherein said step (e) provides an assembly with one or more layers (11-13) of plastic material.

11. The process according to any one of the preceding claims, wherein said step (e) provides an assembly with one or more layers transparent and/or bearing further security elements and/or graphic elements.

12. The process according to any one of the preceding claims, wherein said step (e) provides that said laminable body (102) be inserted as intermediate layer of the document being made.

13. The process according to any one of the preceding claims, wherein said step (e) provides that the diffractive metallic microelements (100) be facing and/or visible towards/through a front surface (15) for consultation of the document (10).

14. The process according to any one of the preceding claims, wherein said or at least one of said further layers (11-13) of the document being made is made of polycarbonate.

15. The process according to any one of the preceding claims, which provides that in a same document (10) plural laminable bodies bearing diffractive metallic microelements (102, 103) be inserted, each of said laminable bodies being obtained according to steps (a) to (d).

## Patentansprüche

1. Verfahren zum Herstellen eines Identifikationsdokumentes (ID-Dokument) (10), vorzugsweise eines Dokumentes aus Kunststoff, wobei das Dokument (10) einen laminierbaren Hauptkörper (102) aufweist, der variabel diffraktive metallische Anti-Fälschungs-Mikroelemente (100) trägt, wobei das Verfahren die Schritte aufweist:
(a) Herstellen eines diffraktiven Musters (1) auf einem laminierbaren Substrat (101), wobei das Letztere vorzugsweise aus Kunststoff besteht;
(b) Aufbringen einer Deckschicht (2) aus metallischem Material auf dem diffraktiven Muster (1) für die gesamte Dicke von Letzterem;
(c) Maskieren der Oberfläche der metallischen Schicht (2) mit einem Schutzmaterial (3), das gemäß einem Schutzmuster angeordnet ist, das Graphismen und/oder variabel codierte Information enthält;
(d) Entfernen des metallischen Materials von der Deckschicht (2) in Zonen, die nicht durch das Schutzmaterial (3) bedeckt sind, wobei die Gesamtanordnung so ist, dass auf dem Substrat (101), nachfolgend auf Schritt (d), variabel diffraktive metallische Mikroelemente (100) definiert bleiben; und
(e) Zusammenfügen, durch Laminieren, des laminierbaren Hauptkörpers (102) mit einer oder mehreren weiteren Schichten (11-13) des zu fertigenden Dokumentes,
wobei der Schritt (e) vorsieht, dass das diffraktive Muster (1) an den metallischen Mikroelementen (100) erhalten bleibt und von dem verbleibenden Substrat (101) eliminiert wird.

2. Verfahren nach Anspruch 1, wobei das Substrat (101) wenigstens bezüglich der diffraktiven metallischen Mikroelemente (100) transparent ist.

3. Verfahren nach Anspruch 1 oder 2, wobei das Substrat (101) aus Polycarbonat gefertigt ist.

4. Verfahren nach einem der vorhergehenden Ansprüche, wobei das diffraktive Muster (1) aus Schritt (a) auf dem Substrat (101) geprägt ist, vorzugsweise wärmegeprägt.

5. Verfahren nach einem der vorhergehenden Ansprüche, wobei der Schritt (b) durch Verdampfen oder Sputtern ausgeführt wird.

6. Verfahren nach einem der vorhergehenden Ansprüche, wobei das Metall aus der Gruppe ausgewählt wird, die enthält: Aluminium, Kupfer, Titan und Zinkoxid und/oder Eisenoxid.

7. Verfahren nach einem der vorhergehenden Ansprüche, wobei das Schutzmuster Profile aufweist, die ausgewählt sind aus: Mikrolinien, Mikroschriftzügen, graphischen Mustern von Mikrolinien und codierter Information.

8. Verfahren nach einem der vorhergehenden Ansprüche, wobei das Schutzmaterial (3) aus einer Gruppe ausgewählt ist, die umfasst: Photoresist, Tinten, UV-Harze.

9. Verfahren nach einem der vorhergehenden Ansprüche, wobei die metallischen Mikroelemente (100) Größen aufweisen, die in einem Bereich von etwa 10-200 Mikrometern enthalten sind.

10. Verfahren nach einem der vorhergehenden Ansprüche, wobei der Schritt (e) eine Anordnung mit einer oder mehreren Schichten (11-13) von Kunststoff zur Verfügung stellt.

11. Verfahren nach einem der vorhergehenden Ansprüche, wobei der Schritt (e) eine Anordnung mit einer oder mehreren Schichten zur Verfügung stellt, die transparent sind und/oder weitere Sicherheitselemente und/oder graphische Elemente tragen.

12. Verfahren nach einem der vorhergehenden Ansprüche, wobei der Schritt (e) bietet, dass der laminierbare Hauptkörper (102) als Zwischenschicht in das zu fertigende Dokument eingesetzt wird.

13. Verfahren nach einem der vorhergehenden Ansprüche, wobei der Schritt (e) bietet, dass die diffraktiven metallischen Mikroelemente (100) einer vorderen Fläche (15) zugewandt sind und/oder hierdurch sichtbar sind, zur Betrachtung des Dokumentes (10).

14. Verfahren nach einem der vorhergehenden Ansprüche, wobei die oder wenigstens eine der weiteren Schichten (11-13) des Dokumentes aus Polycarbonat gefertigt sind.

15. Verfahren nach einem der vorhergehenden Ansprüche, welches bietet, dass in ein und dasselbe Dokument (10) mehrere laminierbare Hauptkörper eingefügt werden, welche diffraktive metallische Mikroelemente (102, 103) tragen, wobei jeder der laminierbaren Hauptkörper gemäß den Schritten (a) bis (d) erhalten wird.

## Revendications

1. Procédé pour fabriquer un document d'identification (ID) (10), de préférence un document en matière plastique, lequel document (10) a un corps pouvant être stratifié (102) supportant des micro-éléments métalliques à diffraction variable anti-contrefaçon (100), lequel procédé comprend les étapes consistant à :
(a) fabriquer un motif diffractif (1) sur un substrat pouvant être stratifié (101), ce dernier étant de préférence en matière plastique ;
(b) appliquer une couche de revêtement (2) de matériau métallique sur ledit motif diffractif (1) pour toute l'épaisseur de ce dernier ;
(c) masquer la surface de ladite couche métallique (2) avec un matériau de protection (3) agencé selon un motif diffractif contenant des graphismes et/ou des informations à codes variables ;
(d) retirer le matériau métallique de ladite couche de revêtement (2) au niveau des zones non recouvertes par ledit matériau de protection (3), dans lequel l'agencement global est tel que sur ledit substrat (101), suite à ladite étape (d), des micro-éléments métalliques à diffraction variable (100) restent définis ; et
(e) assembler, par stratification, le corps pouvant être stratifié (102) avec une ou plusieurs autres couches (11-13) du document qui est réalisé,
dans lequel ladite étape (e) prévoit que le motif diffractif (1) soit préservé au niveau des micro-éléments métalliques (100) et soit éliminé du substrat (101) résiduel.

2. Procédé selon la revendication 1, dans lequel ledit substrat (101) est transparent au moins en correspondance par rapport auxdits micro-éléments métalliques diffractifs (100).

3. Procédé selon la revendication 1 ou 2, dans lequel ledit substrat (101) est réalisé à partir de polycarbonate.

4. Procédé selon l'une quelconque des revendications précédentes, dans lequel ledit motif diffractif (1) de ladite étape (a) est imprimé, de préférence imprimé à chaud sur ledit substrat (101).

5. Procédé selon l'une quelconque des revendications précédentes, dans lequel ladite étape (b) est réalisée par évaporation ou pulvérisation.

6. Procédé selon l'une quelconque des revendications précédentes, dans lequel ledit métal est sélectionné dans le groupe comprenant : l'aluminium, le cuivre, le titane et l'oxyde de zinc et/ou l'oxyde de fer.

7. Procédé selon l'une quelconque des revendications précédentes, dans lequel ledit motif de protection comprend des profils sélectionnés parmi : les micro-lignes, les micro-écritures, les motifs graphiques de micro-lignes et d'informations codées.

8. Procédé selon l'une quelconque des revendications précédentes, dans lequel ledit matériau de protection (3) est sélectionné dans un groupe comprenant : les résines photosensibles, les encres, les résines UV.

9. Procédé selon l'une quelconque des revendications précédentes, dans lequel lesdits micro-éléments métalliques (100) ont des tailles comprises dans une plage d'environ 10-200 microns.

10. Procédé selon l'une quelconque des revendications précédentes, dans lequel ladite étape (e) propose un ensemble avec une ou plusieurs couches (11-13) de matière plastique.

11. Procédé selon l'une quelconque des revendications précédentes, dans lequel ladite étape (e) propose un ensemble avec une ou plusieurs couches transparentes et/ou supportant d'autres éléments de sécurité et/ou éléments graphiques.

12. Procédé selon l'une quelconque des revendications précédentes, dans lequel ladite étape (e) prévoit que ledit corps pouvant être stratifié (102) soit inséré en tant que couche intermédiaire du document qui est réalisé.

13. Procédé selon l'une quelconque des revendications précédentes, dans lequel ladite étape (e) prévoit que les micro-éléments métalliques diffractifs (100) se fassent face et/ou soient visibles vers/à travers une surface avant (15) pour la consultation du document (10).

14. Procédé selon l'une quelconque des revendications précédentes, dans lequel ladite ou au moins l'une desdites autres couches (11-13) du document qui est réalisé, est réalisée à partir de polycarbonate.

15. Procédé selon l'une quelconque des revendications précédentes, qui prévoit que dans un même document (10), plusieurs corps pouvant être stratifiés supportant des micro-éléments métalliques diffractifs (102, 103) soient insérés, chacun desdits corps pouvant être stratifiés étant obtenu selon les étapes (a) à (d).
